# FASCICULE DE BREVET EUROPEEN

(11) **EP 2 281 432 B1**
(45) Date de publication et mention de la délivrance du brevet: **20.02.2013**
(21) Numéro de dépôt: 10305815.2
(22) Date de dépôt: 22.07.2010
(51) Int. Cl.: A01D 45/00, A01D 46/00

(54) **Machine à récolter du pollen**
Maschine zum Ernten von Pollen
Machine for harvesting pollen

(30) Priorité: 31.07.2009 FR 0955410; 05.08.2009 US 231495 P
(43) Date de publication de la demande: 09.02.2011
(73) Titulaire: Stallergenes S.A., 92183 Antony Cedex (FR)
(72) Inventeur: Lafargue, Marianne, 75002, Paris (FR); Nicolas, Vincent, 92170, Vanves (FR)
(74) Mandataire: Blot, Philippe Robert Emile

(56) Documents cités:
- DE-C1- 3 407 517
- US-A1- 2006 053 686

## Description

La présente invention concerne une machine de récolte de pollens.

Il existe déjà dans l'état de la technique, des machines de récolte de ce type qui comportent un châssis motorisé sur lequel sont montés différents moyens parmi lesquels des moyens en forme de tête de récolte par aspiration des pollens raccordés à travers des moyens en forme de cyclone de séparation à des moyens formant ventilateur d'aspiration (voir e.g. US2006/0053686).

Ces différents moyens sont raccordés par un ensemble de gaines aérauliques et les moyens en forme de cyclone de séparation sont associés à des moyens en forme de trémie de récupération des pollens.

On a déjà proposé dans l'état de la technique de réaliser une machine de récolte de ce type, sur laquelle sont prévus deux circuits d'aspiration en parallèle comportant chacun des moyens en forme de ventilateur d'aspiration et des moyens en forme de cyclone de séparation, ceux-ci étant raccordés par des gaines et des raccords à des têtes de récolte des pollens agencées sous la forme d'une rampe placée à l'avant de la machine.

Cette rampe est alors portée par exemple par une fourche réglable en hauteur pour s'adapter à la hauteur des espèces à récolter et dont l'angle par rapport au sol est également réglable.

Cette rampe peut de façon classique être réalisée sous la forme de plusieurs tronçons repliables de façon à permettre à cette machine de circuler sur route.

Ces moyens permettent à la fois d'assurer la séparation des pollens des plantes et la récupération de ceux-ci par aspiration.

Cependant, la mise en oeuvre d'une telle machine a révélé un certain nombre de problèmes.

En effet, des problèmes d'efficacité de l'aspiration, d'agglomération des pollens récoltés et de fermentation de ceux-ci ont été constatés.

La récolte de pollen est principalement effectuée l'été, dans des conditions de températures élevées. Malgré tout, le pollen collecté est très humide, et l'exposition à ces températures élevées pendant le temps de la récolte conduit à une agglomération du pollen qui rend extrêmement difficile la récupération du pollen. Avec les machines de récolte existantes, il est estimé que le pollen ensuite traité pour l'extraction d'allergènes ne représente qu'environ 5% du volume total collecté.

A ce problème d'agglomération s'ajoute un problème de fermentation, également lié aux températures élevées au moment de la récolte, avec pour conséquences une baisse de l'activité allergénique du pollen collecté, et l'augmentation non désirée de la flore microbiologique (bactéries, levures, moisissures) dans le produit collecté. Or, le pollen étant utilisé pour l'extraction d'allergènes destinés ensuite à la préparation de médicaments contre l'allergie ou de tests diagnostic, la charge microbiologique du produit doit rester inférieure à la charge maximale définie par la Pharmacopée européenne.

Le but de l'invention est donc de résoudre ces problèmes.

A cet effet, l'invention a pour objet une machine de récolte de pollens du type comportant un châssis motorisé sur lequel sont montés des moyens en forme de tête de récolte par aspiration des pollens, raccordés à travers des moyens en forme de cyclone de séparation à des moyens formant ventilateur d'aspiration, les moyens en forme de cyclone étant associés à des moyens en forme de trémie de récupération des pollens, **caractérisée en ce que** les moyens en forme de tête de récolte des pollens comprennent un ensemble de hottes d'aspiration présentant chacune une première partie de forme générale tronconique s'évasant entre une ouverture de raccordement au reste des circuits de la machine et une embase polygonale.

Selon d'autres aspects de l'invention, la machine de récolte de pollens comprend l'une ou plusieurs des caractéristiques suivantes :
- l'embase polygonale est carrée,
- les hottes d'aspiration sont disposées sous la forme d'une rampe d'aspiration portée par une fourche réglable en position, hauteur et inclinaison, et fixée à l'avant de la machine,
- elle comporte deux circuits d'aspiration en parallèle et raccordés l'un aux hottes de la partie gauche et l'autre aux hottes de la partie droite de la rampe d'aspiration, ces circuits comportant chacun des moyens en forme de cyclone de séparation, des moyens formant ventilateur d'aspiration et des moyens en forme de trémie de récupération des pollens,
- elle comporte des moyens de congélation des pollens récoltés dans les moyens en forme de trémie de récupération,
- les moyens en forme de trémie de récupération comprennent une trémie proprement dite autour de laquelle est disposé un calorifugeage,
- les moyens en forme de trémie comprennent une trappe d'introduction de glace carbonique dans ceux-ci,
- les moyens en forme de trémie comprennent des moyens d'injection d'azote liquide dans ceux-ci, et
- le fond des moyens en forme de trémie de récupération des pollens comporte une trappe de vidange et de collecte des pollens congelés.

L'invention sera mieux comprise à l'aide de la description qui va suivre donnée uniquement à titre d'exemple et faite en se référant aux dessins annexés, sur lesquels :
- la figure 1 représente un schéma synoptique illustrant la structure d'une machine selon l'invention,
- la figure 2 illustre une tête d'aspiration entrant dans la constitution d'une telle machine,
- la figure 3 représente une hotte d'aspiration entrant dans la constitution d'une telle tête, et
- la figure 4 illustre les moyens en forme de trémie de récupération des pollens entrant dans la constitution d'une telle machine.

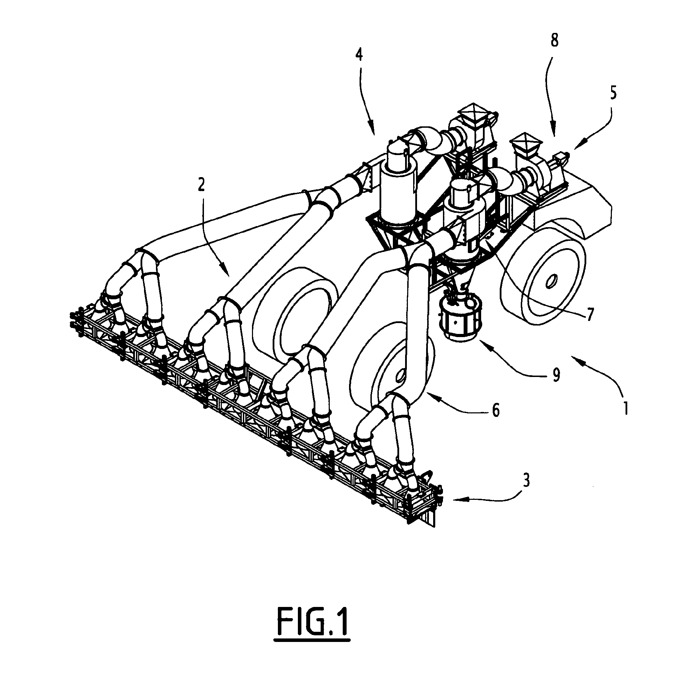

On a en effet illustré sur la figure 1, une machine de récolte de pollens qui est désignée par la référence générale 1.

En fait, cette machine comporte par exemple un châssis motorisé de type approprié, à l'avant duquel est disposée une fourche 2 de support d'une rampe 3 de têtes de récolte par aspiration des pollens.

Ces têtes seront décrites plus en détail par la suite et la rampe est réglable en position, c'est-à-dire en hauteur et en inclinaison.

En fait, les têtes correspondantes de la rampe placées à gauche et à droite de celle-ci, sont raccordées à des circuits d'aspiration en parallèle et désignés par les références générales 4 et 5 respectivement sur cette figure 1.

Chaque circuit tel que par exemple le circuit 5 comporte alors un ensemble de gaines de raccordement, telles que par exemple une gaine désignée par la référence générale 6, permettant de raccorder les têtes d'aspiration correspondantes à des moyens en forme de cyclone de séparation correspondants désignés par la référence générale 7.

Ces moyens en forme de cyclone de séparation 7 sont placés dans la partie intermédiaire de la machine et sont eux-mêmes raccordés par des gaines à des moyens en forme de ventilateur d'aspiration désignés par la référence générale 8 et placés à l'arrière de la machine.

A titre d'exemple, ces moyens en forme de ventilateur peuvent présenter un débit de 6.000 m³/heure pour une vitesse de rotation par exemple de 2.400 tours/minute. Chaque moyen de ventilation gère alors l'aspiration sur une moitié de la rampe 3 de têtes d'aspiration.

Les moteurs des moyens de ventilation peuvent par exemple être formés par des moteurs hydrauliques alimentés à partir d'une source d'énergie disponible sur le châssis. Les vitesses d'aspiration peuvent également être réglables depuis une cabine du châssis indépendamment pour chaque ventilateur.

On peut en effet utiliser une vanne proportionnelle à commande électrique pour ajuster le débit hydraulique dans les moteurs et donc commander la vitesse de rotation de ceux-ci.

Le flux d'air aspiré ainsi généré est transféré depuis la rampe de têtes d'aspiration jusqu'aux ventilateurs par un ensemble de gaines aérauliques souples. Cet ensemble de gaines est optimisé de façon à permettre d'éviter les dépôts de pollens sur les parois. Les longueurs des gaines sont optimisées et les zones de rétentions potentielles sont limitées au maximum.

Cet ensemble est complètement démontable et nettoyable pour permettre par exemple un changement de gaines entre chaque espèce de pollens récoltés.

Un tel ensemble permet d'obtenir une vitesse d'air d'aspiration au niveau du haut de chaque tête d'aspiration supérieur à 15 m/seconde par exemple.

Les moyens en forme de cyclone de séparation 7 permettent quant à eux de séparer les particules aspirées, c'est-à-dire les pollens plus les déchets divers, du flux d'air aspiré. Ces particules sont ensuite récupérées dans des moyens en forme de trémie de récupération associés à ces moyens en forme de cyclone.

L'un de ces moyens en forme de trémie de récupération est désigné par la référence générale 9 sur cette figure 1. Les dimensions des moyens en forme de cyclone sont optimisées de manière à permettre une séparation des pollens du flux d'air proche de 100 %.

Après séparation, les pollens tombent alors dans les moyens en forme de trémie de récupération qui, dans l'exemple illustré, sont placés sous chaque moyen en forme de cyclone de chaque côté du châssis de la machine.

Dans l'exemple de réalisation illustré, la rampe d'aspiration 3 comporte huit têtes d'aspiration raccordées par l'intermédiaire de gaines et de raccords correspondants à l'un des circuits d'aspiration décrits précédemment.

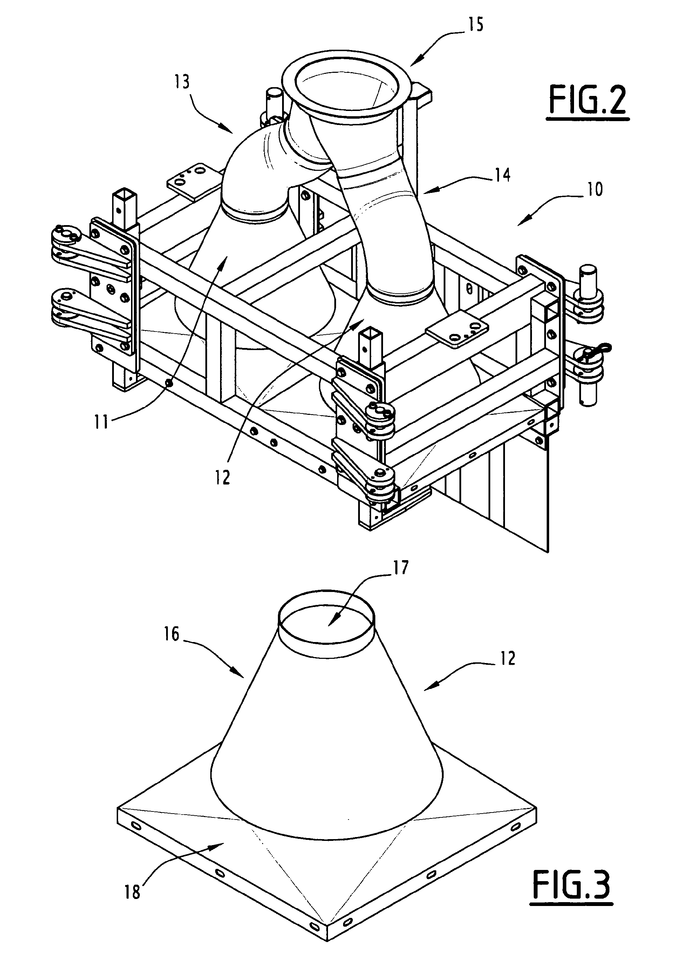

L'une de ces têtes d'aspiration est représentée plus en détail sur la figure 2.

Cette tête est désignée par la référence générale 10 et comporte dans l'exemple illustré deux hottes d'aspiration respectivement 11 et 12 associées l'une à l'autre et placées côte-à-côte.

Chaque hotte présente alors une extrémité ouverte raccordée par une gaine respective 13 et 14 à un raccord 15, celui-ci étant lui-même branché sur l'un des circuits d'aspiration décrits précédemment, tel que le circuit 5.

La conception des hottes a été optimisée du point de vue aéraulique, afin de permettre une vitesse d'aspiration minimale sur la surface la plus grande possible de celles-ci.

Une telle hotte est illustrée plus en détail sur la figure 3.

Cette hotte est par exemple la hotte désignée par la référence générale 12 et celle-ci comporte alors une portion tronconique désignée par la référence générale 16, s'étendant en s'évasant entre une ouverture 17 de raccordement par exemple à la gaine 14 et une embase polygonale 18 par exemple carrée.

Avec les valeurs données précédemment, on obtient avec une telle forme une vitesse d'aspiration supérieure à 1 m/seconde sur plus de 75 % de la surface de la hotte et en particulier de son embase.

Ceci a permis de résoudre les problèmes évoqués précédemment à propos de l'efficacité des moyens d'aspiration de l'état de la technique.

De plus, et afin d'améliorer encore l'efficacité de ces têtes d'aspiration, des moyens tels que par exemple des câbles, peuvent être placés à l'horizontale devant les hottes, ces moyens étant réglables en position pour secouer les plantes lors du passage de la machine, afin d'optimiser encore la libération des pollens par les plantes.

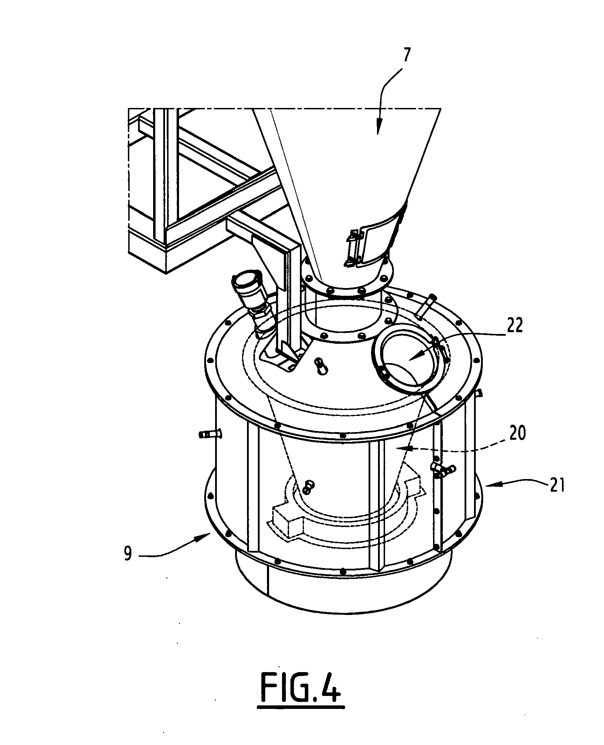

On a illustré sur la figure 4 un exemple de réalisation de moyens en forme de trémie de récupération des pollens.

Comme cela a été indiqué précédemment, des moyens de récupération des pollens comme par exemple les moyens désignés par la référence générale 9, sont placés sous les moyens en forme de cyclone correspondants tels que par exemple les moyens 7.

Dans la machine selon l'invention, ces moyens de récupération des pollens comprennent une trémie proprement dite désignée par la référence générale 20 autour de laquelle est placé un calorifugeage désigné par la référence générale 21.

A son extrémité supérieure, cette trémie 20 est raccordée au cyclone 7 et comporte par exemple une trappe 22 permettant d'introduire dans la trémie de la glace carbonique, afin de provoquer une congélation instantanée des pollens récoltés.

L'intérieur de la trémie est maintenu de préférence à une température inférieure à -20°C.

L'introduction de cette glace carbonique dans la trémie peut être réalisée par exemple par un opérateur.

Il va de soi bien entendu que d'autres modes de réalisation de ces moyens de congélation des pollens peuvent être envisagés.

C'est ainsi par exemple que des moyens d'injection d'azote liquide peuvent également être prévus.

D'autres moyens encore peuvent être envisagés.

On notera également que le fond de la trémie 20 peut être muni de moyens de récupération des pollens ainsi congelés.

Différents modes de réalisation de ces moyens peuvent être envisagés, comme par exemple des moyens à cassettes, à tiroirs, etc ...

On notera également que la trémie 20 de récupération peut par exemple être équipée de moyens formant sonde de température et de moyens formant détecteur de niveau dont les informations de sortie sont transmises par exemple dans la cabine de la machine, afin de permettre par exemple à un opérateur de contrôler que les pollens récoltés sont bien congelés et que la trémie n'est pas pleine, pour déclencher éventuellement des actions correctives telles que par exemple l'ajout de glace carbonique ou la vidange des trémies, afin de récupérer les pollens.

Il a été constaté que l'opération de congélation des pollens récoltés permettait de résoudre les problèmes évoqués précédemment d'agglomération et de fermentation de ceux-ci.

En effet, dans la trémie, le pollen se présente sous la forme d'une poudre congelée, qui reste sous cette forme tout au long de la récolte. Une fois la récolte terminée, le pollen congelé peut ensuite être récupéré et séché par lyophilisation pour fournir une poudre sèche de grains de pollen. Ainsi avec la machine selon l'invention, la quantité de pollen ensuite utilisable pour l'extraction d'allergènes représente désormais jusqu'à 85% du volume total collecté.

En outre, le développement micro biologique au sein du produit est bloqué par la congélation du produit.

Il a aussi été constaté que l'activité allergénique du pollen collecté à l'aide de la machine selon l'invention est supérieure à celle d'un pollen collecté dans une trémie dépourvue de moyen de congélation. Sans vouloir être lié par une hypothèse, la congélation pourrait limiter la dégradation des allergènes dans le pollen due à l'exposition à la chaleur, ou bien l'eau présente dans le produit collecté pourrait réaliser une extraction des allergènes à partir du pollen, le transfert des allergènes vers l'eau étant alors bloqué par la congélation.

Les pollens collectés peuvent être des pollens de graminées, d'herbacées mais aussi des pollens d'arbres, tels que des pollens de dactyle, phléole des prés, flouve, ivraie, paturin, ambroisie, armoise, pariétaire officinale, plantain, frêne, olivier, chêne, platane, bouleau, cyprès, genévrier, thuyas, cèdres.

## Revendications

1. Machine de récolte de pollens du type comportant un châssis motorisé (1) sur lequel sont montés des moyens (3) en forme de tête de récolte par aspiration des pollens, raccordés à travers des moyens (7) en forme de cyclone de séparation à des moyens (8) formant ventilateur d'aspiration, les moyens (7) en forme de cyclone étant associés à des moyens (9) en forme de trémie de récupération des pollens, **caractérisée en ce que** les moyens (3) en forme de tête de récolte des pollens comprennent un ensemble de hottes d'aspiration (11, 12) présentant chacune une première partie (16) de forme générale tronconique s'évasant entre une ouverture (17) de raccordement au reste des circuits de la machine et une embase polygonale (18).

2. Machine de récolte de pollens selon la revendication 1, **caractérisée en ce que** l'embase polygonale est carrée.

3. Machine de récolte de pollens selon la revendication 1 ou 2, **caractérisée en ce que** les hottes d'aspiration (11, 12) sont disposées sous la forme d'une rampe d'aspiration (3) portée par une fourche (2) réglable en position ,hauteur et inclinaison, et fixée à l'avant de la machine.

4. Machine de récolte de pollens selon la revendication 3, **caractérisée en ce qu'**elle comporte deux circuits d'aspiration (4, 5) en parallèle et raccordés l'un aux hottes de la partie gauche et l'autre aux hottes de la partie droite de la rampe d'aspiration (3), ces circuits comportant chacun des moyens en forme de cyclone de séparation, des moyens formant ventilateur d'aspiration et des moyens en forme de trémie de récupération des pollens.

5. Machine de récolte de pollens selon l'une quelconque des revendications précédentes, **caractérisée en ce qu'**elle comporte des moyens de congélation des pollens récoltés dans les moyens (9) en forme de trémie de récupération.

6. Machine de récolte de pollens selon la revendication 5, **caractérisée en ce que** les moyens (9) en forme de trémie de récupération comprennent une trémie proprement dite (20) autour de laquelle est disposé un calorifugeage (21).

7. Machine de récolte de pollens selon la revendication 6, **caractérisée en ce que** les moyens (9) en forme de trémie comprennent une trappe (22) d'introduction de glace carbonique dans ceux-ci.

8. Machine de récolte de pollens selon la revendication 6, **caractérisée en ce que** les moyens (9) en forme de trémie comprennent des moyens d'injection d'azote liquide dans ceux-ci.

9. Machine de récolte de pollens selon l'une quelconque des revendications 5 à 8, **caractérisée en ce que** le fond des moyens (9) en forme de trémie de récupération des pollens comporte une trappe de vidange et de collecte des pollens congelés.

## Claims

1. Pollen harvesting machine, of the type comprising a motorised chassis (1) on which there are mounted means (3) which are in the form of a head for harvesting pollen by means of suction and which are connected, via means (7) in the form of a separation cyclone, to means (8) which form a suction fan, the means (7) in the form of a cyclone being associated with means (9) in the form of a pollen recovery hopper, **characterised in that** the means (3) in the form of a pollen harvesting head comprise an assembly of suction hoods (11, 12) which each have a first generally frustoconical portion (16) which widens between an opening (17) for connection to the remainder of the circuits of the machine and a polygonal base (18).

2. Pollen harvesting machine according to claim 1, **characterised in that** the polygonal base is square.

3. Pollen harvesting machine according to claim 1 or claim 2, **characterised in that** the suction hoods (11, 12) are arranged in the form of a suction ramp (3) which is carried by a fork (2) which can be adjusted in terms of position, height and tilt, and which is fixed to the front of the machine.

4. Pollen harvesting machine according to claim 3, **characterised in that** it comprises two parallel suction circuits (4, 5), one of which is connected to the hoods of the left-hand portion and the other of which is connected to the hoods of the right-hand portion of the suction ramp (3), these circuits each comprising means in the form of a separation cyclone, means forming a suction fan and means in the form of a pollen recovery hopper.

5. Pollen harvesting machine according to any one of the preceding claims, **characterised in that** it comprises means for freezing the harvested pollen in the means (9) in the form of a recovery hopper.

6. Pollen harvesting machine according to claim 5, **characterised in that** the means (9) in the form of a recovery hopper comprise an actual hopper (20) around which thermal insulation (21) is arranged.

7. Pollen harvesting machine according to claim 6, **characterised in that** the means (9) in the form of a hopper comprise a flap (22) for introducing dry ice therein.

8. Pollen harvesting machine according to claim 6, **characterised in that** the means (9) in the form of a hopper comprise means for introducing liquid nitrogen therein.

9. Pollen harvesting machine according to any one of claims 5 to 8, **characterised in that** the base of the means (9) in the form of a pollen recovery hopper comprises a flap for emptying and collecting the frozen pollen.

## Patentansprüche

1. Pollensammelmaschine von dem Typ, welcher ein motorisiertes Chassis (1) aufweist, auf dem Einrichtungen (3) in Form eines mittels Ansaugung arbeitenden Pollensammelkopfes montiert sind, die über Einrichtungen (7) in Form eines Abscheidezyklons an Einrichtungen (8) angeschlossen sind, welche ein Sauggebläse bilden, wobei die zyklonförmigen Einrichtungen (7) Einrichtungen (9) in Form eines Auffangkastens für Pollen zugeordnet sind,
**dadurch gekennzeichnet,**
**dass** die Einrichtungen (3) in Form eines Pollensammelkopfes eine Anordnung von Ansaughauben (11, 12) aufweisen, die jeweils ein im allgemeinen kegelstumpfförmiges erstes Teil (16) besitzen, das sich zwischen einer Öffnung (17) zum Verbinden mit den übrigen Kreisen der Maschine und einem polygonalen Ansatz (18) konisch erweitert.

2. Pollensammelmaschine nach Anspruch 1,
**dadurch gekennzeichnet,**
**dass** der polygonale Ansatz quadratisch ist.

3. Pollensammelmaschine nach Anspruch 1 oder 2,
**dadurch gekennzeichnet,**
**dass** die Ansaughauben (11, 12) in Form einer Saugbrücke (3) angeordnet sind, welche von einer am Vorderteil der Maschine befestigten Gabel (2) getragen ist, deren Position, Höhe und Neigung regulierbar sind.

4. Pollensammelmaschine nach Anspruch 3,
**dadurch gekennzeichnet,**
**dass** sie zwei parallele Saugkreise (4, 5) aufweist, von denen der eine mit den Hauben des linken Teils und der andere mit den Hauben des rechten Teils der Saugbrücke (3) verbunden ist, wobei diese Kreise jeweils Einrichtungen in Form eines Abscheidezyklons, Einrichtungen, welche ein Sauggebläse darstellen, und Einrichtungen in Form eines Auffangkastens für Pollen aufweisen.

5. Pollensammelmaschine nach einem der vorherigen Ansprüche,
**dadurch gekennzeichnet,**
**dass** sie in den Einrichtungen (9) in Form eines Auffangkastens Einrichtungen zum Tiefkühlen der gesammelten Pollen aufweist.

6. Pollensammelmaschine nach Anspruch 5,
**dadurch gekennzeichnet,**
**dass** die Einrichtungen (9) in Form eines Auffangkastens einen Trichter (20) aufweisen, um den eine Wärmeisolierung (21) angeordnet ist.

7. Pollensammelmaschine nach Anspruch 6,
**dadurch gekennzeichnet,**
**dass** die kastenförmigen Einrichtungen (9) eine Luke (22) zum Einbringen von Trockeneis aufweisen.

8. Pollensammelmaschine nach Anspruch 6,
**dadurch gekennzeichnet,**
**dass** die kastenförmigen Einrichtungen (9) Einrichtungen zum Einspritzen von flüssigem Stickstoff aufweisen.

9. Pollensammelmaschine nach einem der Ansprüche 5 bis 8,
**dadurch gekennzeichnet,**
**dass** das Bodenteil der Einrichtungen (9) in Form eines Auffangkastens für Pollen eine Klappe zum Entleeren und Sammeln der tiefgekühlten Pollen aufweist.
